(19) Europäisches Patentamt
European Patent Office
Office européen des brevets

(11) Publication number: 0 040 498 A1

# (12) EUROPEAN PATENT APPLICATION

(21) Application number: 81302045.0

(22) Date of filing: 08.05.81

(51) Int. Cl.³: C 09 D 5/16
C 08 F 212/08

(30) Priority: 09.05.80 NL 8002689

(43) Date of publication of application: 25.11.81 Bulletin 81/47

(84) Designated Contracting States: AT BE CH DE FR GB IT LI LU NL SE

(71) Applicant: M & T CHEMICALS B.V.
Europaweg van Cittershaven P.O.Box 70
NL-4380 AB Vlissingen-Oost(NL)

(72) Inventor: Overmars, Henricus Gerardus Jozeph
Prof. Sprincklaan 1A
3705 AA, Zeist(NL)

(72) Inventor: van Elven, Aris
Hittekamp 35
3956 Leersum(NL)

(74) Representative: Ellis, John Clifford Holgate et al,
MEWBURN ELLIS & CO. 70-72 Chancery Lane
London WC2A 1AD(GB)

## (54) Improvements in or relating to polymers having biocidal properties.

(57) A biocidal polymer contains a recurrent unit

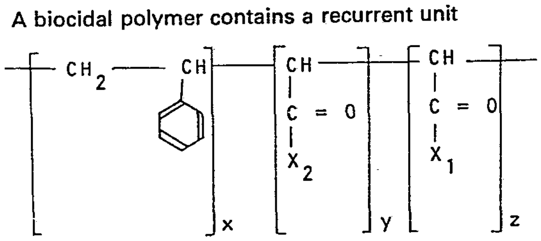

wherein x = 1 to 4, y + z = 2, y not being 0, $X_1$ = -OH or -O-Sn-$(R^4)_3$, $X_2$ = 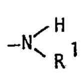 or 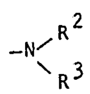

in which $R^1$ is a substituted or non-substituted alkyl radical having 5-18 carbon atoms, $R^2$ and $R^3$ which may be the same or different are chosen from substituted or non-substituted alkyl radicals of 2-18 carbon atoms, and $R^4$ is an alkyl radical having 1-6 carbon atoms, a substituted or non-substituted aryl radical or a cycloalkyl radical. A coating composition including such a polymer gives biocidal protection when applied to a surface exposed to an aqueous medium containing algae and barnacles.

EP 0 040 498 A1

Croydon Printing Company Ltd.

"IMPROVEMENTS IN OR RELATING TO POLYMERS HAVING BIOCIDAL PROPERTIES."

The present invention relates to improved polymers having biocidal properties.

In Journal Coating Technology 51, 88-91 (1979) copolymers from maleic anhydride and methylvinylether are disclosed wherein the anhydride group may be cleaved by subjecting it to a reaction with an alcohol or an amine and subsequently the carboxyl group formed may be reacted with tributyltinoxide. Consequently a number of copolymers has been prepared, wherein benzylamine or aniline is used as an amine, and methanol, ethanol, n-propanol, butanol, cyclohexanol or benzylalcohol is used as an alcohol. In said publication particular attention is paid to the hardness of the coating films and the rate of hydrolysis of the polymers. Nothing is disclosed about any biocidal properties.

Further, from Dutch patent specification 158,531 it is known, that in copolymers having a backbone of polystyrene maleic acid an organotin radical may be introduced by preparing first certain organotin vinyl monomers and subsequently either polymerizing said monomers or copolymerizing said monomers with vinylmonomers, e.g. acrylacrylates or maleic anhydride.

It is also possible to start from a (co)polymer having the structure that is desired as backbone and reacting said (co)polymer with organotin compounds. High

molecular weight styrene maleic anhydride copolymers may be prepared, e.g. by reacting equimolar proportions of styrene and maleic anhydride in butanone-2 at 80°C, in the presence of azoisobutyronitrile as a catalyst. The molecular weight of such a copolymer is about $10^5$.

By reacting such a polymer wherein the recurring units have the following structure

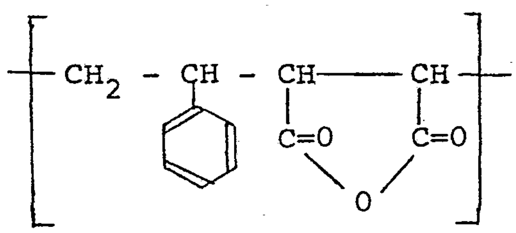

with $(R^4)_3-Sn-O-Sn-(R^4)_3$ or $HOSn(R^4)_3$, wherein $R^4$ is as hereinafter defined, the biocidal group $Sn(R^4)_3$ may be introduced in accordance with either one of the following reaction schemes

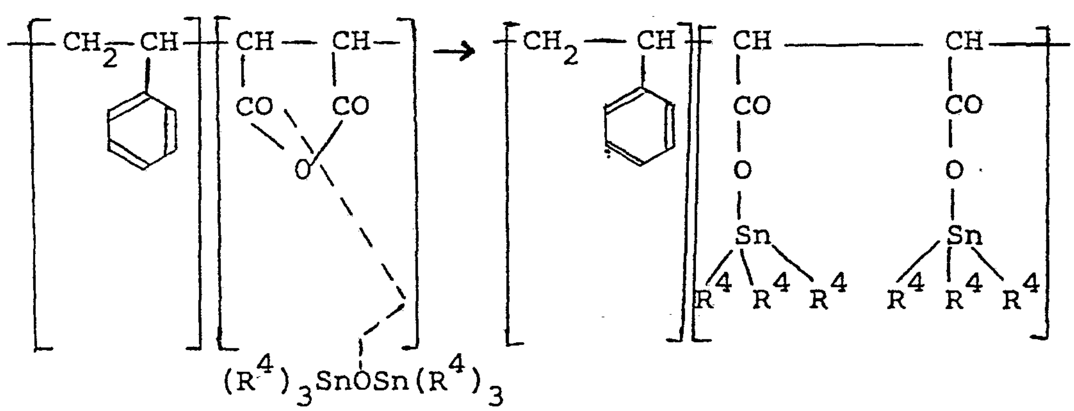

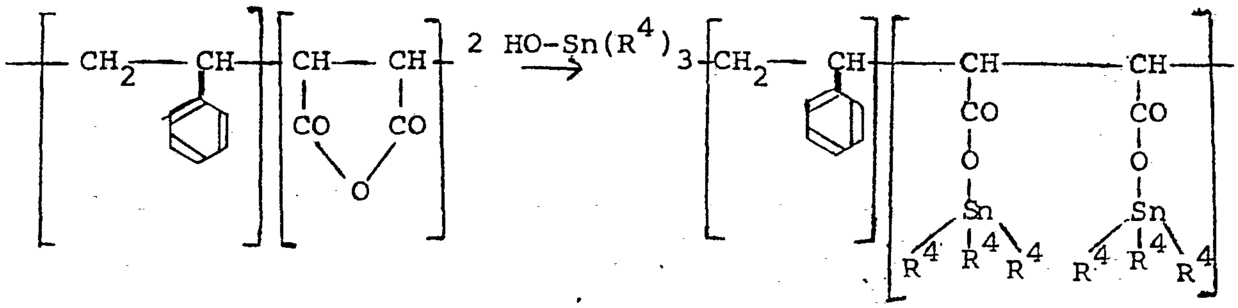


With said reaction equimolar proportions of the reaction components, calculated from the acid number of the polymer, are dissolved or suspended in an aromatic hydrocarbon, e.g. xylene, and said mixture is heated for several hours under reflux.

If $(R^4)_3SnOH$ is used as one of the reaction components, the reaction water should be removed by means of an azeotropic distillation.

It has appeared that organotin carboxylates that are in contact with seawater will hydrolyse. Said reaction proceeds at a high rate.

According to one aspect of the invention there is provided a polymer having biocidal properties and characterised by containing the following recurrent unit (I) in its formula:

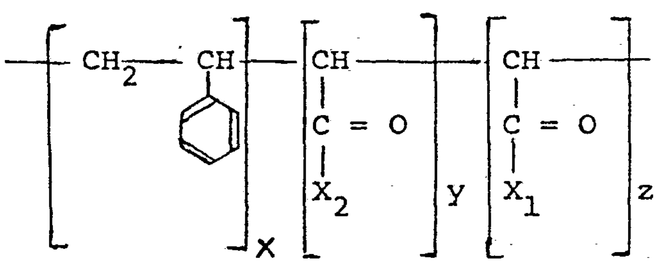
(I)

wherein x = 1 to 4, y + z = 2, y not being 0, $X_1 = -OH$ or $-O-Sn-(R^4)_3$, $X_2 = -N{<}^{H}_{R^1}$ or $-N{<}^{R^3}_{R^3}$ in which $R^1$ is a substituted or non-substituted alkyl radical having 5-18 carbon atoms, $R^2$ and $R^3$ which may be the same or different

are chosen from substituted or non-substituted alkyl radicals of 2-18 carbon atoms, and $R^4$ is an alkyl radical having 1-6 carbon atoms, a substituted or non-substituted aryl radical or a cycloalkyl radical. With the polymers of this invention upon exposure to an aqueous environment such as seawater the biocides that inhibit growth are released slowly, upon hydrolysis of the polymer, due to which a long lasting action is achieved. It has appeared that for a surface coated with such a polymer when organic biocides are bound covalently by means of an amide link, they will hydrolyse so slowly that at the coating surface a concentration is generated, that provides a sufficiently long lasting biocidal action.

With the present polymers having polystyrene maleic anhydride as the backbone the anhydride group is very reactive with respect to hydroxyl- or amino groups.

In recurrent unit (I) preferably $x = 1$ or $y = 1$ and more preferably $x = 1$ and $y = 1$, since such polymers may be prepared easily and such a structure provides a maximum of possibilities for the introduction of biocidal groups.

If desired $y \leqslant 1$, since substitution of the amino groups may be performed easily.

From the cycloalkyl radicals ($R^4$) the cyclohexyl radical, from the alkyl radicals ($R^4$) the butyl radical and from the aryl radicals ($R^4$) the phenyl radical is preferably chosen.

The invention also provides : a process for the preparation of a paint or other coating composition exhibiting anti-fouling activity with respect to algae and barnacles, wherein at least one polymer of the invention is included as a binder in the composition during the manufacture thereof; a paint or other coating composition exhibiting anti-fouling activity with respect to algae and barnacles, having a content of at least one polymer of the invention, and a boat or other aquatic craft whose water-contacting surface has been protected by application thereto of a paint or other coating composition including the polymer of the invention.

In an investigation, polymers having recurring units (I) were prepared on the basis of the results that were obtained by means of a screening test for their biocidal activity with respect to Nauplius larvae of Artenia salina. Said larvae may be cultivated easily from the eggs that are sold as brine shrimp eggs (Artemia salina). Said test is described in the literature as a test for insecticidal activity.

The biocidal action of a number of compounds is shown in the following table. All of said materials were very brittle and had very poor film-forming properties. Consequently before testing them for their anti-fouling action by means of a raft test on panels in the open sea (usual for testing powdery materials for same purpose) said compounds were mixed with a binder.

Introduction to triorganotin compounds, e.g. bis-(tributyltin) oxide, in polymeric biocides, by reacting said compounds with the free carboxyl group of the polymer provides new types of polymers that have anti-fouling properties. The film-forming properties and the solubility of said polymers was improved by introducing the triorganotin group.

Consequently a broad variation is possible in the amount of amine and of organotin compound that may be introduced into the polymer. For example in a polymer having the following recurrent unit :

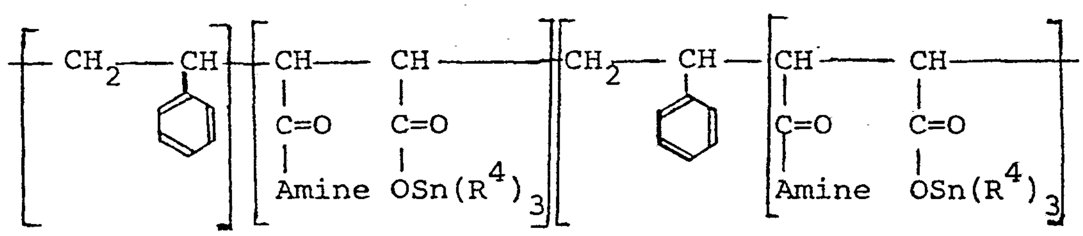

The carboxyl groups may be reacted not only with amines and organotin compounds in a molar ratio of 1 : 1, but also variations as indicated in the following recurrent units are also possible:

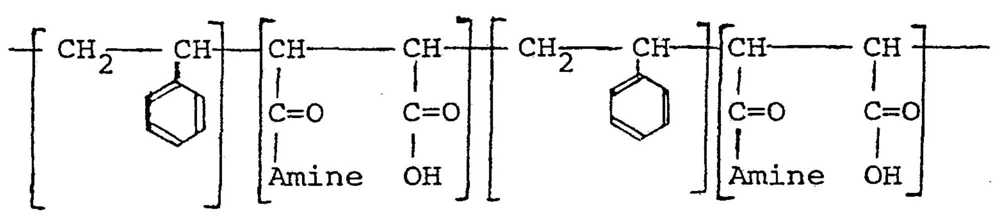

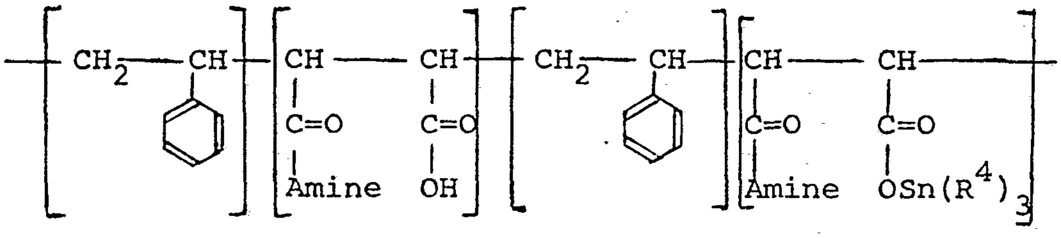

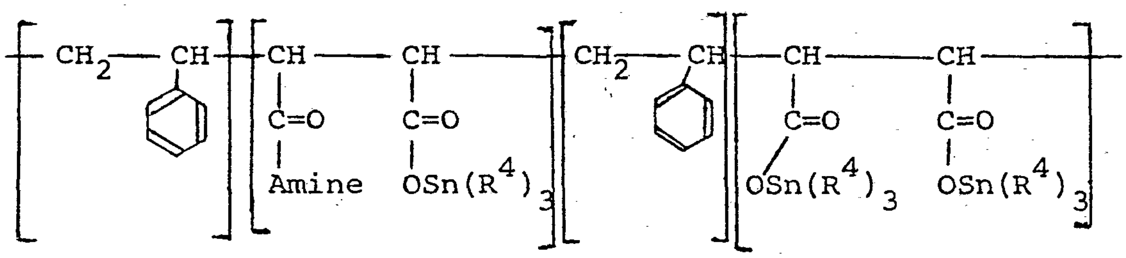

The panels that had been coated with the coating compositions that contained the polymers of this invention, were tested in two ways, i.e.

a) 30 cm below the water surface in a horizontal position (in said position just algae will grow thereon)

b) 1.5 cm below the water surface in a vertical position (in said position prefentially larvae of barnacles will grow thereon).

The panels were continuously controlled for a period of one year. The growth of algae or barnacles was indicated as a percentage of the surface that had been covered.

It appeared that the leaching out of the amine groups at a somewhat lower pH than the pH of seawater in the open sea is very constant and long lasting. This is useful since on the one hand the pH of seawater in a harbour is lower than in the open sea and on the other hand fouling occurs more on ships in a harbour. During sailing the leaching

out should not be so effective, since then algae or barnacles may not deposit themselves on the ship's hull.

Calcium ions from seawater bind themselves to the carboxyl groups of the polymer and then form a barrier. In a harbour, where the pH of the water is lower, said calcium compounds hydrolyse and provide then room for a biocidal action. This is promoted by the fact that the two carboxyl groups in the polymer are positioned so near to each other. The polymers according to the invention are solid at ambient temperature. They are soluble in the solvents usually used in the paint industry. When they are applied as a coating composition solutions of about 30 weight percent are generally used.

Evidently in such coating compositions also pigments, e.g. zinc oxide and copper oxide, as well as other resins may be incorporated.

# TABLE

Biocidal action of some organic and organo metallic compounds against larvae of *Artemia salina* L.

| Compound | Concentration in ppm that is lethal for 90% of the larvae if they are in contact therewith for a period of 24 hours |
|---|---|
| n-butylamine | > 1000 |
| amylamine | 100 |
| hexylamine | 100 - 1000 |
| heptylamine | 100 |
| decylamine | 1 - 10 |
| dodecylamine | 1 |
| tetradecylamine | 1 - 10 |
| hexadecylamine | 1 - 10 |
| octadecylamine | 10 - 100 |
| oleylamine | 10 - 100 |
| di-n-octylamine | 0.1 - 1 |
| dioctadecylamine | 10 - 100 |
| benzylamine (comparative) | 100 - 1000 |
| aniline (comparative) | > 1000 |
| tributyltinoxide (comparative) | 0.1 |
| tributylleadacetate (comparative) | <1 |
| tributylgermaniumacetate (comparative) | <1 |
| phenylmercury acetate (comparative | 1 |
| dibutyltinoxide (comparative) | >1000 |

EXAMPLE I.

Preparation of poly(styrene maleic anhydride) (SMA)

In a flask having a capacity of 5 litres a solution of 135 g of distilled styrene, 129 g. of purified maleic anhydride and 1.25 g. benzoylperoxide in 3.75 litres benzene was stirred for 1 hour at room temperature. Then it was heated under reflux on a water bath. After 30 minutes a deposit was formed. After 3 hours of heating and stirring the reaction mixture was cooled and the polymer obtained was separated by means of filtration, washed with benzene and dried under vacuum at 45°C. Yield 235 g.

Reaction of SMA with dodecylamine.

50 g. SMA were dissolved in 750 ml. tetrahydrofuran (THF). A solution of 41.2 g dodecylamine in 150 ml. THF was added. Then under reflux and stirring said mixture was heated for 4 hours. The solution was concentrated by means of evaporation till a syrupy liquid was obtained. The syrup was spread out over glass plates and dried in a stove. The brittle dried product was ground and washed three times with toluene and then dried again. The yield amounted to 80.3 g. (91%). N found 3.00 %, calculated 3.51%. This corresponds to a conversion of 75.9 mole equivalents anhydride (0.38 eq. half amide).

The biocidal polymer obtained was tested in the above described way for its anti-fouling activity. After 8

weeks testing on a test raft it appeared that the algae and barnacles fouling was considerably less than on the blanks (20% against 80 - 100% fouling). After 42 weeks the fouling due to algae was still 20%. The blank was completely fouled by algae.

Reaction of the dodecyl halfamide with bistributyltinoxide.

25 g. of the half amide and 29.5 tributyltinoxide in 600 ml. xylene were heated to the boiling point for 2 hours. Then 225 ml. xylene were distilled and the water formed was removed azeotropically. After heating at the boiling temperature for another night, xylene was distilled till a viscous liquid was obtained. Said liquid was dried on a glass plate in a stove. The clear film obtained had a weight of 53.7 g.

Panels coated with said mixed biocidal polymer appeared to avoid fouling by means of algae and barnacles for a period of 42 weeks in the fleet test. The blanks were fouled completely.

EXAMPLE II

Preparation of di(n-octyl)amide of SMA.

35.5 g SMA were dissolved in 500 ml. THF. A solution of 38.1 g di(n-octyl)amine in 100 ml. THF was added. Then said mixture was heated under stirring and reflux for 4 hours. The solution was concentrated, spread out over a glass plate and dried. The yield amounted after washing

with toluene 68.1 g to 92.5%. From the N-percentage determination it appeared that 90 mole equivalents anhydride had been converted (0.45 eq. half amide).

Upon testing of the anti-fouling activity it appeared that after 8 weeks fouling by algae and barnacles was considerably less than on the blanks that were fouled substantially completely.

Reaction of di(n-octyl)half amide of SMA with bistributyltinoxide.

25 g. di(n-octyl)half amide and 20.5 g. bistributyltinoxide in 600 ml. xylene were heated to the boiling point for 2 hours. After distillation of 225 moles of xylene, during which water was removed azeotropically, it was heated under reflux for another night. After distillation of xylene a viscous liquid was obtained which was spread over a glass plate and dried in a stove. The clear mass obtained had a weight of 43.9 g.

Panels coated with a film of said mixed biocidal polymer were tested for their anti-fouling properties on a raft in open sea for 42 weeks. After 11 weeks no fouling by algae and barnacles was observed, whereas the blanks were completely fouled. After 42 weeks still no fouling by algae was observed.

That the polymers according to the invention are active against algae could not be predicted, since in the screening test only the activity with respect to larvae of

*Artemia salina* were investigated.

If an organic as well as an organotin compound is grafted on polystyrene maleic anhydride, likewise an antifouling activity for barnacles is obtainable.

CLAIMS :

1. A polymer having biocidal properties and characterised by containing the following recurrent unit (I) in its formula :

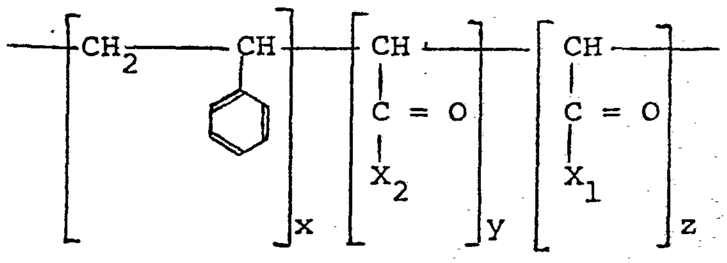

(I)

wherein x = 1 to 4, y + z = 2, y not being O, $X_1$ = OH or $-O-Sn-(R^4)_3$,

$X_2$ = 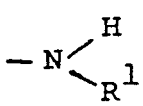 or 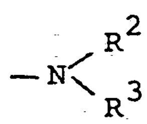 in which $R^1$ is a substituted or non-substituted alkyl radical having 5 - 18 carbon atoms, $R^2$ and $R^3$ which may be the same or different are chosen from substituted or non-substituted alkyl radicals of 2 - 18 carbon atoms, and $R^4$ is an alkyl radical having 1 - 6 carbon atoms, a substituted or non-substituted aryl radical or a cycloalkyl radical.

2. A polymer according to Claim 1 wherein x = 1.

3. A polymer according to Claim 1 or Claim 2, wherein y = 1.

4. A polymer according to Claim 1 or Claim 2, wherein y is less than 1.

5. A polymer according to any preceding claim, wherein $R^4$ is cyclohexyl.

6. A polymer according to any one of claims 1 to 4, wherein $R^4$ is butyl.

7. A polymer according to any one of claims 1 to 4, wherein $R^4$ is phenyl.

8. A process for the preparation of a paint or other coating composition exhibiting anti-fouling activity with respect to algae and barnacles, characterised in that at least one polymer as claimed in any preceding claim is included as a binder in the composition during the manufacture thereof.

9. A paint or other coating composition exhibiting anti-fouling activity with respect to algae and barnacles, characterised by a content of at least one polymer as claimed in any one of claims 1 to 7.

10. A boat or other aquatic craft whose water-contacting surface has been protected by application thereto of a paint or other coating composition claimed in claim 9 or a paint or other coating composition produced by the process claimed in claim 8.

European Patent Office

# EUROPEAN SEARCH REPORT

0040498

Application number

EP 81 30 2045

| Category | Citation of document with indication, where appropriate, of relevant passages | Relevant to claim |
|---|---|---|
| A | US - A - 2 454 284 (J.S. KIRK)<br>* column 6, example 8 *<br>-- | 1 |
| A | FR - A - 2 297 866 (BAYER)<br>* claims 1 and 2 *<br>-- | 1 |
| A | US - A - 4 098 971 (A.T. PHILLIP et al)<br>* claims *<br>------ | 1 |

**DOCUMENTS CONSIDERED TO BE RELEVANT**

**CLASSIFICATION OF THE APPLICATION (Int. Cl.³)**

C 09 D 5/16
C 08 F 212/08

**TECHNICAL FIELDS SEARCHED (Int. Cl.³)**

C 09 D 5/16
C 08 F 212/08
C 08 F 212/06
C 08 L 35/06

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 01-09-1981 | DE ROECK |

EPO Form 1503.1 06.78